# EUROPEAN PATENT APPLICATION

(11) **EP 4 098 113 A1**
(43) Date of publication of application: **07.12.2022**
(21) Application number: 21177243.9
(22) Date of filing: 01.06.2021
(51) Int. Cl.: A01K 61/13

(54) **WATER TRANSPORTING DEVICE AND METHOD**

(71) Applicant: Alfa Laval Corporate AB, 221 00 Lund (SE)
(72) Inventor: STØRKSON, Thomas, 5154 BØNES (NO); KLEMENTSEN, Eirik, 5915 HJELMÅS (NO); JACOBSEN, Oddbjørn, 5108 HORDVIK (NO); LJONES, Terje, 5600 NORHEIMSUND (NO)
(74) Representative: Alfa Laval Attorneys

(57) **Abstract**

The disclosure concerns a water transporting device (2) for a fish habitat (4) configured to be suspension in open water. The device (2) comprises an elongated conduit member (6) and a water moving device (12). The conduit member (6) at a first end portion (10) thereof is provided with at least one outlet opening (20) and the water moving device (12) is arranged at a second end portion (16) of the elongated conduit member (6). A plate member (22) is arranged at the second end portion (16). The plate member (22) extends in a radial direction (R) beyond the elongated conduit member (6). The plate member (22) is provided with a through opening (24) arranged in fluid communication with an inside of the elongated conduit member (6). The water moving device (12) is arranged to move (12) water through the through opening (24) and into the elongated conduit member (6).

## Description

### TECHNICAL FIELD

The invention relates to a water transporting device for a fish habitat and to a method for transporting water in a fish habitat suspended in open water.

### BACKGROUND

Fish farming (pisciculture) in open water is carried out in fish habits that are suspended at sea or in a lake. The idea is that fish are bred constrained within the fish habitat and fresh water is brought into the fish habitat by natural current of the sea or the lake.

Such a fish habit may be referred to as a net pen or net cage, although it need not be formed entirely out of net. Parts of a fish habitat suspended in open water may be made from canvas and/or other sheet-like materials which are less water permeable than a net. For instance, canvas and/or other sheet-like materials may be used in parts of a suspended fish habitat in order to collect dead fish and/or sludge within the net pen or to reduce sun irradiation.

Herein, the term fish habitat will be used, which refers to a fish habitat configured to be suspended in open water. The fish habitat is open for water exchange between the fish habitat and open water outside the fish habitat.

One problem with such a fish habitat is the occurrence of lice which may thrive in the fish habitat and will affect fish within the fish habitat as well as wild fish outside the fish habitat. Further considerations are dead fish and/or sludge produced within the fish habitat. If not collected, dead fish, if due to disease, may affect living fish in the habitat and the sludge may negatively affect the sea or lake outside the fish habitat.

A simple, natural, non-harming way to deal with the lice is to line an upper portion of the fish habitat with a skirt, a so-called lice skirt. Since lice thrive in approximately the upper 10 meters of water irradiated by the sun, the shadow provided by the skirt makes the conditions less favourable for lice.

However, use of a skirt can lead to poor water condition within the skirt and requires some measure for forced water circulation within the skirt e.g., if ambient water current is low. A water transporting device named Aquastream provided by the company Framo is configured to improve water quality within a lice skirt by pumping water within the fish habitat from a level below the lice skirt through a tube up to a level of the lice skirt.

Dead fish and sludge produced in a net cage may be removed by a collector as disclosed in GB 2543924. The collector is configured for removal of waste at a bottom of a net cage. An upper face of the collector is designed to collect the waste and is connected to a pump for removal of the waste. A balloon is fastened to the upper face of the collector. The balloon is connected to a hose for supply and removal of a fluid having a density of less than water. The collector is positioned at the bottom of the net cage by utilising control lines in conjunction with supplying and removing fluid, in particular air, from the balloon in order to control the position of the collector.

### SUMMARY

It has been realised by the inventors that in the process of supplying water to a level of a lice skirt within a fish habitat, it is not ideal that water is sourced from within the habitat. Sludge from lower levels of the fish habitat is in risk of being circulated within the habitat, which may affect water quality negatively.

It would be advantageous to overcome, or at least alleviate, the above mentioned drawback. In particular, it would be desirable to enable transport of water from outside a fish habitat to an upper level of a fish habitat. To better address one or more of these concerns, a water transporting device for a fish habitat and/or a method for transporting water in a fish habitat having the features defined in the independent claims is/are provided.

According to an aspect of the invention, there is provided a water transporting device for a fish habitat configured to be suspension in open water. The water transporting device comprises an elongated conduit member configured to extend along a longitudinal extension, and a water moving device. A radial direction extends perpendicularly to the longitudinal extension. The elongated conduit member, at a first end portion thereof, is provided with at least one outlet opening. The water moving device is arranged at a second end portion of the elongated conduit member. A plate member is arranged at the second end portion of the elongated conduit member. The plate member extends in the radial direction beyond the elongated conduit member. The plate member is provided with a through opening arranged in fluid communication with an inside of the elongated conduit member. The water moving device is arranged to move water through the through opening and into the elongated conduit member.

Since, the plate member is arranged at the second end portion of the elongated conduit member and extends in the radial direction beyond the elongated conduit member, the plate member is configured to abut against a bottom portion of the fish habitat and to form a partition between the water volume above the plate member and the water volume below the plate member, which includes the open water outside the fish habitat. Moreover since, the plate member is provided with the through opening arranged in fluid communication with the inside of the elongated conduit member and the water moving device is arranged to move water through the through opening and into the elongated conduit member, in use of the water transporting device, water from below the plate member and outside the fish habitat is drawn into the elongated conduit member and moved to the at least one outlet opening at the first end portion thereof. Thus, the water transporting device provides for water from outside the fish habitat to be transferred into the fish habitat, such as to a level of a lice skirt of the fish habitat. Water quality within the lice skirt is improved in this manner.

The water transporting device accordingly, is configured to improve water quality in a fish habitat provided with a lice skirt by supplying water from outside the fish habitat thereby avoiding the risk of circulating sludge within the fish habitat.

The water transporting device is configured to move water from outside the fish habitat into the fish habitat.

The water transporting device is uncomplicated and robust. It is also compatible with most types of fish habitats configured to be suspension in open water. Specifically so, because the water transporting device does not require penetration of the fish habitat. The uncomplicated character of the water transporting device ensures that it is easily serviced and parts thereof are easily exchangeable.

When in use in a fish habitat, the water transporting device has a generally elongated constitution with the plate member arranged at bottom of the fish habitat and the at least one outlet positioned at a level above the plate member, suitably at a level of a lice skirt within the fish habitat. The elongated conduit member extends from the plate member and is configured for water to be transferred therethrough to the at least one outlet opening thereof.

The water transporting device may be installed in the process of establishing a new fish habitat. Also, the water transporting device may be installed in an older fish habitat that has been in use for some time. The water transporting device may be temporarily removed from the fish habitat e.g., when fish is harvested from the fish habitat.

Thus, the water transporting device is configured for installation inside a fish habitat without having to provide openings in any delimit elements of the fish habit. The fish habitat accordingly, remains undamaged before and after installation of the water transporting device.

The fish habitat forms a delimited space with one or more net portions and optionally one or more canvas and/or sheet material portions. Alternatively, the fish habitat may have a cage structure i.e., be of a more rigid construction than a net and canvas construction.

The one or more net portions and one or more canvas and/or sheet material portions from delimiting elements of the fish habitat. A lice skirt made e.g. from canvas may form part of the fish habitat or may be suspended inside or outside the fish habitat from a region close of the water surface to a depth of approximately 10 m. Via the one or more net portions, the fish habitat is at least partially open for water exchange between the volume delimited by the fish habitat and open water outside the fish habitat.

The elongated conduit member is configured to conduct water from a lower level of the fish habitat to an upper level of the fish habitat. The longitudinal extension of the elongated conduit member may be straight or curved, depending inter alia on currents in the water where the fish habitat is suspended. Seen locally along the longitudinal extension, a radial direction extends perpendicularly to the longitudinal extension. Under completely still conditions in user of water transporting device, the longitudinal extension may have a vertical direction and accordingly, the radial direction may be horizontal.

The water moving device may be any kind of device which is capable of drawing water through the through opening, into the elongated conduit member, and transfer it towards the first end portion of the elongated conduit member. Examples of a water moving device may be a pump, an impeller, an airlift pump, an injector, etc.

The at least one outlet opening is configured for outlet of the water from the elongated conduit member, which water has been transferred into the elongated conduit member by the water moving device at the plate member.

Herein the terms upstream and downstream are used in relation to the movement of water from the plate member towards the first end portion of the elongated conduit member during use of water transporting device.

The plate member may have an extension in the radial direction of more than twice the diameter of the elongated conduit member.

The plate member may have a substantially circular outer periphery e.g., in order to abut against a lower portion of the fish habitat with an inverted conical shape. The inverted conical shape lower portion of the fish habitat may comprise net or canvas, against which the plate member may abut.

The plate member may be a water-impermeable member. That is, the plate member may be made out a water-impermeable material. Only at the through opening, water may flow through the plate member. In use of the water transporting device, the plate member, due to its extension radially beyond the elongated conduit member, ensures that water is drawn through the through hole from below the plate member.

According to embodiments, a half of the elongated conduit member closest to the first end portion may be at least partially provided with a number of separate outlet openings, wherein the at least one outlet opening forms part of the number of outlet openings. In this manner, during use of the water transporting device, water transferred from the second end of the elongated conduit member may be a distributed in the fish habitat over a larger region than if only one outlet opening were provided.

According to embodiments, the number of separate outlet openings may be distributed around the elongated conduit member. In this manner, it may be ensured that during use of the water transporting device, the first end portion is not affected by, or at least not to any substantial degree, by reaction forces caused by the water leaving the number of separate outlet openings. Accordingly, securing the first end portion within the fish habitat does not require stronger anchoring than required for natural currents and waves.

According to embodiments, the elongated conduit member may comprise a collapsible wall and a number of ring members or at least one helical member, wherein the ring members are, or the at least one helical member is, connected to the collapsible wall such that the collapsible wall is secured in relation to the radial direction R. In this manner, the elongated conduit member may be collapsed along the longitudinal extension while the ring members ensure that the elongated conduit member has an open cross section.

More specifically, due to the collapsible wall of the elongated conduit member, it may be bunched up in order to be easily transported to and from the fish habitat and in order to be easily positioned within the fish habitat during an installation process of the water transporting device in the fish habitat. Also, when the water transporting device is to be removed from the fish habitat, the collapsible wall of the elongated conduit member permits it to be bunched up in order to be easily removed therefrom.

The function of the ring members is twofold; they ensure that the elongated conduit member has an open cross section when water is transferred therethrough and that the collapsible wall is bunched up in a sufficiently orderly manner when collapsed.

In embodiments which instead of the ring members comprise at least one helical member, the at least one helical member ensures that the elongated conduit member has an open cross section when water is transferred therethrough. In case the helical member also is utilised for the collapsible wall to bunch up in an orderly manner, individual turns of the helical member may be connected to each other in a hinging manner.

According to embodiments, the water transporting device may comprise a buoyancy member arranged at the first end portion of the elongated conduit member. In this manner, it may be ensured that the first end portion of the elongated conduit member floats upwardly within a fish habitat and may ensure that the elongated conduit member has a longitudinal extension when installed in the fish habitat.

Also, the buoyancy member may provide for the first end portion of the elongated conduit member to remain at an upper level of the fish habitat when the water transporting device is installed in or removed from the fish habitat.

According to embodiments, the plate member may be provided with a cavity, wherein the cavity is configured to be filled with a fluid, and wherein the cavity is sealable and openable. In this manner, the buoyancy of the plate member may be controlled. When the fluid is a gas, such as air, the plate member may float in water and when the fluid is water, the plate member may be heavier than water and sink to the bottom of the fish habitat. By filling the cavity with either gas or water, installation and removal of the water transporting device in/from the fish habitat is facilitated.

Alternatively or additionally, sealable and openable floating devices may be provided in connection with the plate member.

According to embodiments, the plate member may have a conical shape, frustoconical shape, and/or part-spherical shape, wherein a broad end of the conical shape, frustoconical shape, and/or part-spherical shape may be arranged towards the elongated conduit member seen along the longitudinal extension. In this manner, the centre of gravity of the plate member may be provided below the broad end and thus, the plate member may naturally assume a position within the fish habitat with the elongated conduit member extending upwardly and the through opening facing downwardly.

According to embodiments, the plate member has a first main side facing the elongated conduit member and an opposite second main side facing away from the elongated conduit member. The first main side of plate member may have a trough shape and the second main side of the plate member may have a convex shape. In this manner, sludge and dead fish may be collected in the trough shape of the plate member and be prevented from sinking towards the bottom of the sea or lake.

According to embodiments, the plate member may be provided with a sludge intake at the first side of plate member. In this manner, sludge and/or dead fish may be drawn into the sludge intake in order to be transferred from the fish habitat.

According to embodiments, the water transporting device may comprise a sludge transport conduit, wherein the sludge transport conduit may be arranged in fluid communication with the sludge intake. In this manner, sludge and/or dead fish may be transferred from the plate member via the sludge intake and the sludge transport conduit to outside the fish habitat.

According to embodiments, downstream of the water moving device there may be arranged an elongated element within the elongated conduit member. The elongated element may extend along the longitudinal extension, and an end of the elongated element may be pointed towards the first end portion of the elongated conduit member. In this manner, when the collapsible wall of the elongated conduit member is collapsed, the collapsible wall and the ring members may be positioned around the elongated element. Thus, the collapsible wall may be bunched up in an orderly manner with the ring members stacked on top of each other and aligned to such an extent that the water transporting device is easy to handle during transport, installation, and removal.

According to embodiments, the water transporting device may comprise a strainer arranged upstream of the water moving device, in or at the through opening. In this manner, the net which delimits the fish habitat below the plate member may be prevented from being drawn into the elongated conduit member by the water moving device. Also, large particles may be prevented from being drawn into the elongated conduit member, depending on how coarse the strainer is.

According to a further aspect of the invention, there is provided, a method for transporting water in a fish habitat suspended in open water, utilising a water transporting device according to any one of aspects and/or embodiments discussed herein. The method comprises steps of:
- positioning the plate member in abutment with an inside of a delimiting element of the fish habitat,
- positioning the first end portion of the elongated conduit member above the plate member,
- moving water with the water moving device through the delimiting element via the through opening into the elongated conduit member and towards the first end portion of the elongated conduit member, and
- ejecting water through the at least one outlet opening within the fish habitat at a level above the plate member.

Thus, water is transferred from outside the fish habitat into the fish habitat to an upper level thereof, thereby avoiding the risk of circulating sludge with the water transporting device within the fish habitat. Good or at least adequate water quality is thus, maintained in the fish habitat.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 illustrates a cross section through a fish habitat and an embodiment of a water transporting device,
Figs. 2a and 2b illustrate a water transporting device according to embodiments,
Fig. 3 shows a first end portion of an elongated conduit member,
Fig. 4 shows a cross section of a plate member,
Figs. 5a and 5b illustrate a water transporting device in a compact state,
Fig. 6 illustrates a method for transporting water in a fish habitat, and
Fig. 7 shows a cross section through a portion of an elongated conduit member.

### DETAILED DESCRIPTION

Aspects and/or embodiments of the invention will now be described more fully. Like numbers refer to like elements throughout. Well-known functions or constructions will not necessarily be described in detail for brevity and/or clarity.

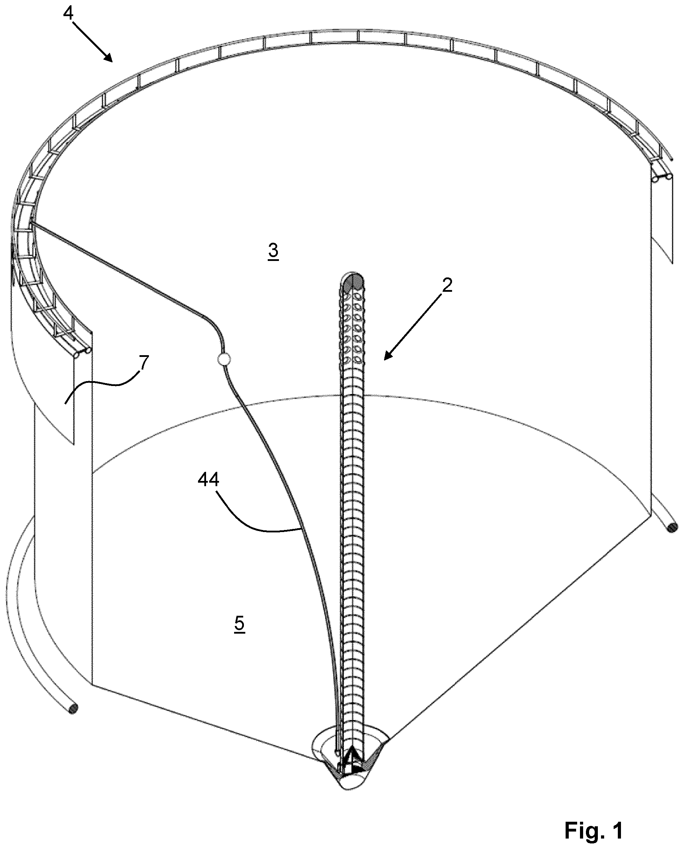

Fig. 1 illustrates a cross section through a fish habitat 4 and an embodiment of a water transporting device 2. The water transporting device 2 is configured to be arranged in a fish habitat 4 e.g., as shown in **Fig. 1****.**

The fish habitat 4 is configured to be suspension in open water, at sea or in a lake. The fish habitat 4 forms a delimited space in which fish are bred. The fish habitat 4 comprises delimiting elements, typically in the form of one or more net portions and optionally one or more canvas and/or sheet material portions. In the illustrated embodiments, the fish habitat 4 comprises a cylindrical portion 3 which extends from a region of the water surface substantially vertically downwardly and an inverted conically shaped portion 5. The cylindrical portion 3 is formed by a net and the inverted conically shaped portion 5 is formed by a canvas or sheetlike material.

Thus, water may flow into, out of, and/or through the fish habitat 4 via the cylindrical portion 3. The inverted conically shaped portion 5 prevents sinking debris, sludge, and/or dead fish from sinking to the bottom of the sea or lake.

A lice skirt 7 e.g., made from canvas, is suspended outside the fish habitat 4 from a region of the water surface along a portion of the cylindrical portion 3. The lice skirt 7 reduces sun irradiation into the fish habitat 4, which impairs the growth of lice in the fish habitat 4. However, the lice skirt 7 also reduces water exchange in the upper portion of the fish habitat 4.

Mentioned purely as examples, the cylindrical portion 3 may have a diameter within a range of 20 - 80 metres and a depth within a range of 20 - 80 metres. The inverted conically shaped portion 5 may have a vertical height within a range of 10 - 80 metres. The lice skirt 7 may reach a depth within a range of 5 - 20 metres.

In order to ensure good water quality in the portion of the fish habitat 4 encircled by the lice skirt 7, the water transporting device 2 is arranged to supply water from outside the fish habitat 4, more specifically from below the fish habitat 4, to the upper region of the fish habitat 4.

The fish habitat 4 may be double walled (not shown) i.e., outside of the cylindrical portion 3 and the inverted conically shaped portion 5 there may be arranged a further net in order to prevent fish from escaping in case the cylindrical portion 3 or the inverted conically shaped portion 5 should rupture.

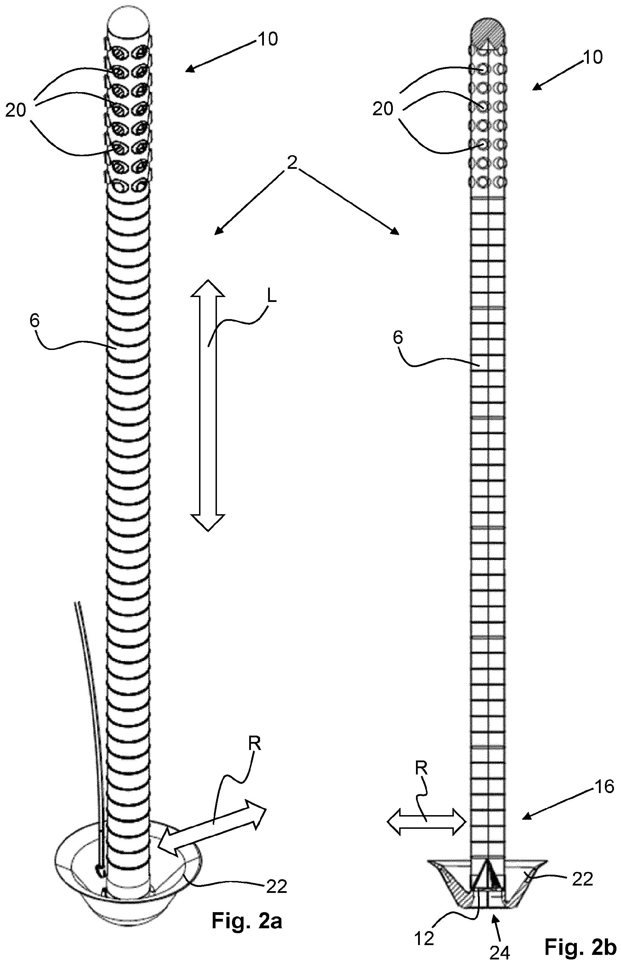

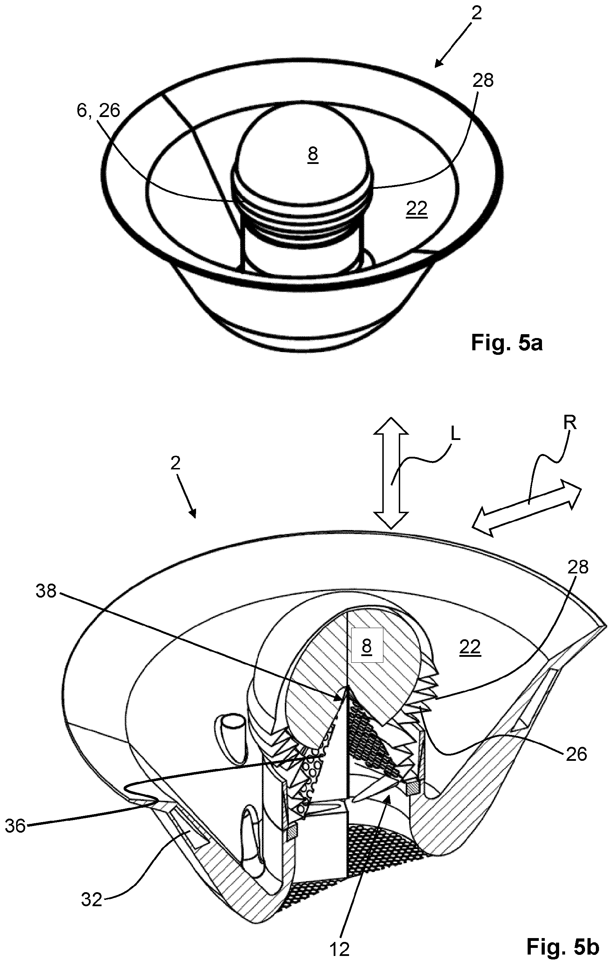

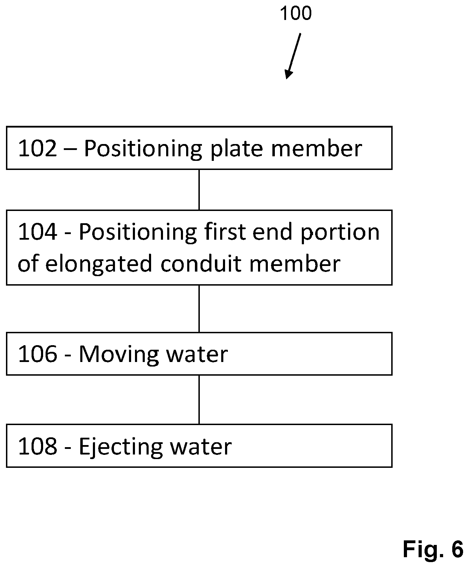

The water transporting device 2 is further discussed below with reference to Figs. 2a - 5b and a use of the water transporting device 2 is discussed below with reference to **Fig. 6****.**

**Figs. 2a and 2b** illustrate a water transporting device 2 according to embodiments. The water transporting device 2 may be a water transporting device 2 as discussed above with reference to **Fig. 1****.** In **Fig. 2a** the water transporting device 2 is shown in a perspective view and in **Fig.2b** the device 2 is shown in a cross section. In both figures, the water transporting device 2 is shown in an extended state as installed in a fish habitat 4, as shown in **Fig. 1****,** in contrast with a compact state further discussed below with reference to **Figs. 5a and 5b****.**

The water transporting device 2 comprises an elongated conduit member 6. The elongated conduit member 6 is configured to extend along a longitudinal extension L, indicated with a double arrow. A radial direction R, indicated with a double arrow, extends perpendicularly to the longitudinal extension L.

Under completely still conditions in the fish habitat, the longitudinal extension L may have a vertical extension, as shown in **Figs. 2a and 2b****.** The longitudinal extension may be curved, such as C-shaped, S-shaped, helical, part helical, etc., depending on water currents and waves in the sea or lake wherein the fish habitat is suspended.

The elongated conduit member 6, at a first end portion 10 thereof is provided with at least one outlet opening 20 for water being transported through the elongated conduit member 6. A plate member 22 is arranged at a second end portion 16 of the elongated conduit member 6, opposite to the first end portion 10.

The first end portion 10 may be secured within the fish habitat 4 e.g., by ropes or wires (not shown).

The plate member 22 extends in the radial direction R beyond the elongated conduit member 6. That is, the plate member 22 has a larger diameter than the elongated conduit member 6.

The plate member 22 is provided with a centrally arranged through opening 24, which is arranged in fluid communication with an inside of the elongated conduit member 6. More specifically, the elongated conduit member 6 is directly or indirectly connected to the plate member 22 such that the through opening 24 and the inside of the elongated conduit member 6 are arranged in fluid communication. Thus, water from a side of the plate member 22 opposite to the elongated conduit member 6 is able to be transferred into the elongated conduit member 6.

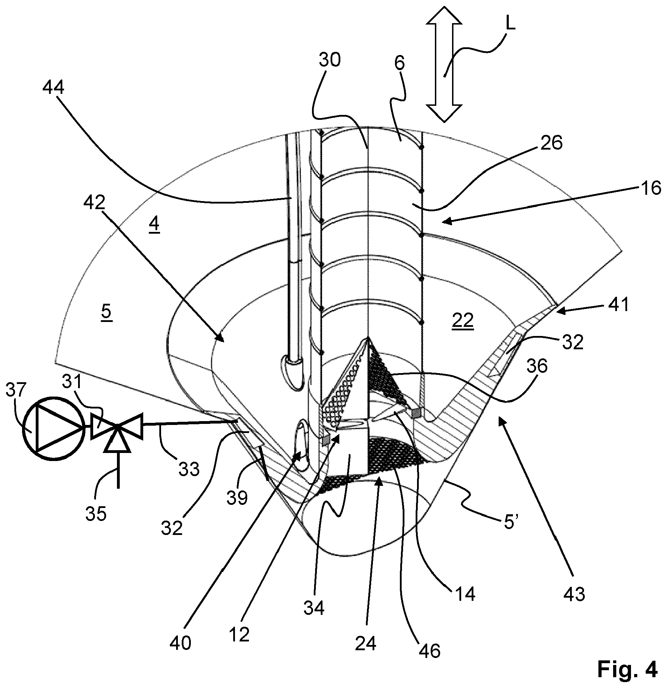

A water moving device 12 is arranged to move water through the through opening 24 and into the elongated conduit member 6 in order to be let out through the at least one outlet opening 20 at the first end 10 of the elongated conduit member 6. When installed in a fish habitat, the water transporting device 2 thus, enables transport of water from outside the fish habitat to an upper level of the fish habitat as will be discussed further below with inter alia reference to **Figs. 4a and 4b**.

Purely mentioned as examples, the elongated conduit member 6 may have a length within a range of 20 - 80 metres and a diameter within a range of 0.5 - 2 metres. The water moving device 12 may be arranged to provide a flow of water through the elongated conduit member 6 within a range of 5 000 - 25 000 m³/hour.

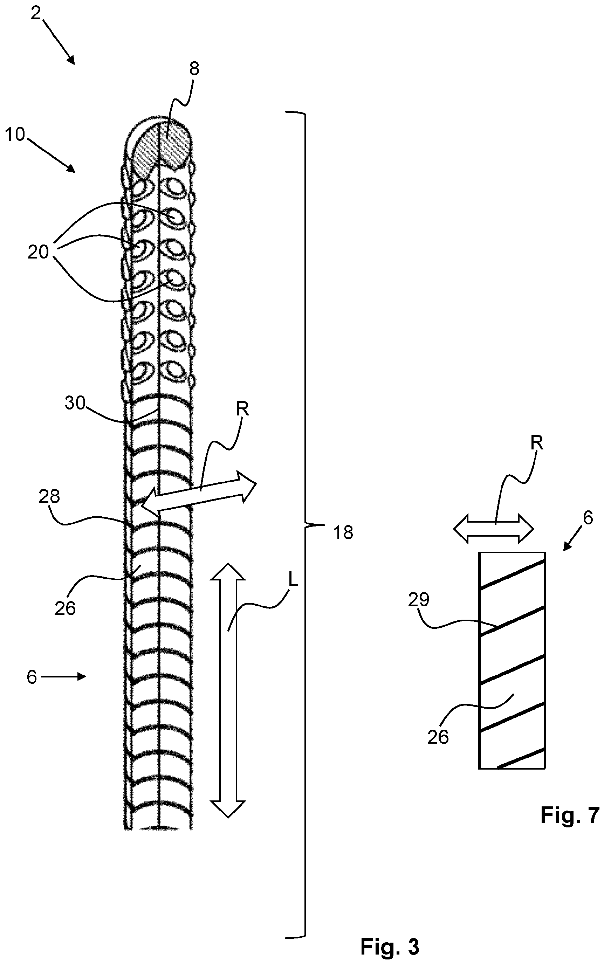

**Fig. 3** shows the first end portion 10 of the elongated conduit member 6 in more detail.

A half 18 of the elongated conduit member 6 closest to the first end portion 10 is at least partially provided with a number of separate outlet openings 20.

Mentioned purely as examples, the number of separate outlet openings 20 may be distributed over a length of 0 - 20 metres along the elongated conduit member 6. The number of outlet openings 20 may be with a range of 1 - 100. A total outlet area of the outlet openings 20 may be within a range of 0.2 - 3 m².

Suitably, the number of separate outlet openings 20 is distributed around the elongated conduit member 6. Thus, water leaving the elongated conduit member 6 via the outlet openings 20 will not affect the position of the first end portion 10 or at least not affected the position to any substantial degree. Namely, reaction forces of the water leaving the outlet openings 20 will cancel out each other, at least to a substantial degree. For instance, each of the outlet openings 20 may be configured to provide a flow of water in the radial direction R out of the elongated conduit member 6, or the reaction forces of water directed out of the outlet openings as a collective cancel out each other in a different manner.

The elongated conduit member 6 comprises a collapsible wall 26 and a number of ring members 28. The ring members 28 are connected to the collapsible wall 26 such that the collapsible wall 26 is secured in relation to the radial direction R. For instance, the collapsible wall may be provided with channels or loops through which the ring members 28 extend.

In alternative embodiments, shown in **Fig. 7****,** the elongated conduit member 6 comprises a collapsible wall 26 and at least one helical member 29. The at least one helical member 29 is connected to the collapsible wall 26 such that the collapsible wall 26 is secured in relation to the radial direction R.

The collapsible wall 26 may be made out of canvas. Due to the collapsible wall 26, the elongated conduit member 6 is able to be compacted along the longitudinal extension L, see further below with reference to **Figs. 5a and 5b****.** The ring members 28 ensure that the elongated conduit member 6 has an open cross section perpendicularly to the longitudinal extension L for the transfer of water through the elongated conduit member 6.

Although according to some embodiments, the flow of water through the elongated conduit member 6 might be sufficient for expanding the collapsible wall 26, the use of the ring members 28 or a helical member 29 reduces the flow resistance within the elongated conduit member 6 in comparison with an unexpanded collapsible wall 26.

Mentioned as examples the collapsible wall 26 may be made from thin canvas e.g., of the type used in automobile air-bags, thin nylon canvas, or thin PVC-canvas. The ring members 28 may be made of a material heavier than water such a nylon material.

According to some embodiments, the ring members 28 may be arranged at longer distances from each other than shown in **Fig. 3****,** and/or only along particular sections of the elongated conduit member 6, such as along the first and/or second end portions 10, 16, see also **Fig. 2b****.**

In the illustrated embodiments, the ring members 28 have a substantially circular shape. According to alternative embodiments the ring members 28 may have a different shape which expands the collapsible wall 26, such as oval, hexagonal, square, or triangular shapes.

The water transporting device 2 comprises a buoyancy member 8 arranged at the first end portion 10 of the elongated conduit member 6. The buoyancy member 8 floats upwardly in the water within a fish habitat. The buoyancy member 6 may be positioned at the water surface or beneath the water surface when the water transporting device 2 is installed in a fish habitat.

According to embodiments, the buoyancy member 8 may be connected to the plate member via at least one flexible rope-shaped structure 30. The at least one flexible rope-shaped structure 30 may be shorter along the longitudinal extension L than the collapsible wall 26. In this manner, the buoyancy member 30 and the plate member are connected to each other in a manner that provides ease in the collapsible wall 26. See also below with reference to **Fig. 4****.**

The flexible rope-shaped structure 30 may be a cable, a wire, a rope, a cord, or similar. Suitably, the flexible rope-shaped structure 30 may be less flexible along the longitudinal direction L than the collapsible wall 26. For instance, the rope-shaped structure 30 may be a non-stretch rope comprising synthetic fibres such as ultra-high-molecular-weight polyethylene fibres or aramid fibres.

**Fig. 4** shows a cross section of a plate member 22 at a second end portion 16 of an elongated conduit member 6 of a water transporting device according to embodiments. The plate member 22 is positioned at a bottom of a fish habitat 4. The water transporting device may be a water transporting device as discussed above with reference to **Figs. 1 - 3****.**

The plate member 22 is positioned at the bottom of the fish habitat 4 abutting against an inverted conically shaped portion 5 of the fish habitat 4. The inverted conically shaped portion 5 may be made out of a net. Thus, water may be drawn from outside the fish habitat 4 through the net into the through opening 24 by the water moving device 12 and transferred into the elongated conduit member 6.

Alternatively, the inverted conically shaped portion 5 may be made from canvas or another sheetlike material. However, in such case, a portion of the inverted conically shaped portion 5 arranged below the plate member 22, such as the lowermost portion 5' of the inverted conically shaped portion 5, has to be made form net in order for the water moving device 12 to draw water from outside the fish habitat 4 into the elongated conduit member 6. In some existing fish habitats 4 the lowermost portion 5' of a canvas inverted conically shaped portion 5 may have to be replaced with a net.

According to some embodiments, the water moving device 12 may comprise a rotatable impeller 14. Thus, the water moving device 12 may be a pump. The rotatable impeller 14 may form a rotor of such a pump.

According to some embodiments, the water moving device 12 may be arranged in connection with the through opening 24. In this manner, the water moving device 12 may be conveniently integrated with the plate member 52.

In embodiments wherein the water moving device 12 comprises a rotatable impeller 14, it may be arranged within or adjacent to the through opening 24 and a stator of the pump may be built into or onto the plate member 52.

Alternatively, as mentioned initially, the water moving device 12 may be any kind of device which is capable of drawing water through the through opening 24, into the elongated conduit member 6, and towards the first end portion of the elongated conduit member 6.

In the illustrated embodiments, in order to alter the buoyancy of the plate member 22 during installation and removal of the water transportation device, the plate member 22 may be provided with a cavity 32. The cavity 32 is configured to be filled with a fluid and the cavity 32 is sealable and openable.

During installation of the water transporting device, initially, the cavity 32 is filled with a gas e.g., air. Thus, the plate member 22 may float on the water surface in order to be directed to the place where the water transporting device is to be positioned within the fish habitat 4. Then water is let into the cavity 32 and the plate member 22 sinks to the bottom of the fish habitat 4.

When the water transporting device is to be removed from the fish habitat 4, the water in the cavity 32 is pressed or sucked out of the cavity 32, which instead is filled with gas again, and thus, floats towards the surface of the fish habitat 4.

The control system for such filling and emptying of the cavity 32 may be devised in any suitable manner.

In **Fig. 4****,** one such control system is schematically exemplified. The cavity 32 is sealable and openable via a controllable valve 31. In a closed position of the valve 31, the fluid within the cavity 32 cannot escape. The controllable valve 31 is connected to a first conduit 33 leading to/from the cavity 32, to a second conduit 35 leading to open air or open water, and to a source 37 of pressurised gas, such as a compressor or a gas cylinder. The controllable valve 31 and the source of pressurised gas 37 may be provided above the water surface. The source 37 of pressurised gas may be removable.

The controllable valve 31 has a closed position and two positions, in each of which respective of the second conduit 35 and the gas source 37 are connected to the cavity 32. A third conduit 39 is connected to the cavity 32. The third conduit 39 is open and extends downwardly from the cavity 32.

Starting with a gas, such as air in the cavity 32 and the plate member 22 floating, the controllable valve 31 is in the closed position. In order to fill the cavity 32 with water, the valve 31 is set to connect a first conduit 33 with the second conduit 35. Thus, water fills the cavity 32 via the third conduit 39 as the air in the cavity 32 escapes via the first and second conduits 33, 35. In order to fill the cavity 32 with air, the valve 31 is set to connect the source 37 of pressurised gas with the first conduit 33. Thus, the pressurised gas will press the water out of the cavity 32 via the third conduit 39 and the plate member 22 will float to the surface.

The plate member 22 has a conical shape, frustoconical shape, and/or part-spherical shape. A broad end 41 of the conical shape, frustoconical shape, and/or part-spherical shape is arranged towards the elongated conduit member 6 seen along the longitudinal extension L. Since the point of the gravity of the plate member 22 is positioned below the broad end 41, the plate member 22 will assume a position within the fish habitat 4 with the elongated conduit member 6 extending upwardly and an open end of the through opening 24 facing downwardly.

At least a portion of the plate member 22, such as at least the broad end 41, is configured to abut against a delimiting element of the fish habitat 4, such as the inverted conically shaped portion 5.

The plate member 22 has a first main side 42 facing the elongated conduit member 6 and an opposite second main side 43 facing away from the elongated conduit member 6. In use of the water transporting device, the first main side 42 faces upwardly and the second main side 43 faces downwardly, as shown in **Fig. 4****.** The first main side 42 has a trough shape and the second main side 43 has a convex shape.

Sludge and dead fish sinking downwardly in the fish habitat 4 are collected in the plate member 22 due to its trough shape. Also, if the inverted conically shaped portion 5 of the fish habitat 4 is made of canvas or other sheetlike material, sludge and dead fish may slide along the inverted conically shaped portion 5 into the plate member 22 and be collected therein.

The trough shape may be asymmetrical i.e., along the longitudinal direction, the trough shape may be deeper in one circumferential position than in a different circumferential position.

The plate member 22 is provided with a sludge intake 40 at the first side 42 of plate member 22. Thus, sludge and dead fish may be drawn into the sludge intake 40 in order to be transferred from the fish habitat 4.

The trough shape of the plate member 22 may be asymmetrical i.e., along the longitudinal extension L, the trough shape may be deeper in one circumferential position than in a different circumferential position.

Suitably, the sludge intake 40 may be arranged at a portion of the plate member 22 where the trough shaped is at its deepest. In this manner, it may be ensured that sludge and dead fish caught in the plate member 22 may slide towards the sludge intake 40 for transfer from the fish habitat 4.

The water transporting device comprise a sludge transport conduit 44, see also **Fig. 1****.** The sludge transport conduit 44 is arranged in fluid communication with the sludge intake 40. The sludge transport conduit 44 is configured for sludge and/or dead fish to be transferred from the plate member 22 to outside the fish habitat 4. A transfer arrangement, such as an airlift pump, may be provided in connection with the sludge intake 40 and/or the sludge transport conduit 44. Thus, sludge and/or dead fish may be transferred from the plate member 22 through the sludge transport conduit 44 to outside the fish habitat 4.

According to embodiments, the water transporting device may comprise fins 34 arranged extending along the longitudinal extension L in and/or at the through opening 24. The fins 34 may be arranged upstream of the water moving device 12. In this manner, the water drawn into the through opening 24 by the water moving device 12 may be directed to flow in parallel with the longitudinal extension L.

In particular in embodiments wherein the water moving device 12 comprises an impeller 14, the fins 34 prevent or at least reduce a flow of water in a circumferential direction of the elongated conduit member 6. Thus, torsional forces affecting the elongated conduit member 6 are at least reduced.

The water transporting device comprises a strainer 46 arranged upstream of the water moving device 12 in or at the through opening 24. Thus, the delimiting element of the fish habitat 4, such as the inverted conically shaped portion 5, is prevented from being drawn into the water moving device 12 and the elongated conduit member 6.

The plate member 22 may have diameter of more than twice the diameter of the elongated conduit member 6. Mentioned purely as an example, the plate member 6 may have a diameter, or mean diameter in case an outer periphery of the plate member is not circular, within a range of 1 - 4 metres.

The plate member 22 may be made from a fibre reinforced plastic material. The plate member 22 may comprise several sections which are assembled to form the plate member 22. For instance, in order to facilitate road transport to a fish farming cite and/or facilitate manufacture of the plate member 22.

The rope-shaped structure 30 connected to the buoyancy member 8 at the first end of the elongated conduit member 6 is directly or indirectly connected to the plate member 22. In these embodiments, the rope-shaped structure 30 is connected to an elongated element 36, which in turn is connected to the plate member 22.

The above-discussed ease provided in the collapsible wall 26 by the rope-shaped structure connected between the buoyancy member and the plate member 22, prevents the elongated conduit 6 from being subjected to, or at least reduces the degree to which the elongated conduit 6 is subjected to, torsional forces in embodiments wherein the water moving device 12 comprises an impeller 14.

A bundle of electric cables and/or hoses (not specifically shown) may be provided for supply of electric power and/or gas such as air from above the water surface to the plate member 22. The bundle may be provided separately or in connection with the elongated conduit member 6 and/or the sludge transport conduit 44. Mentioned purely as examples, electric power may be supplied to the water moving device 12 and gas may be supplied to the cavity 42 and/or to one or more air lift pumps e.g., arranged in connection with the sludge intake 40 or as the water moving device 12.

**Figs. 5a and 5b** illustrate the water transporting device 2 in a compact state. In **Fig. 5a** the water transporting device 2 is shown in a perspective view and in **Fig. 5b** the device 2 is shown in a cross section. The water transporting device 2 may be in the compact state during part of an installation process or removal process of the device 2 in/from a fish habitat.

As discussed above, the elongated conduit member 6, beside a collapsible wall 26, may comprise a number of ring members 28 connected to the collapsible wall 26. In **Figs. 5a and 5b****,** the water transporting device 2 is shown with the elongated conduit member 6 collapsed along the longitudinal extension L.

The collapsible wall 26 thus, provides uncomplicated installation and equally uncomplicated removal of the water transporting device 2 from the fish habitat.

In the compact state, the collapsible wall 26 is bunched up. The ring members 28 ensure that the collapsible wall 26 is bunched up in an orderly manner when collapsed.

More specifically, downstream of the water moving device 12 there may be arranged an elongated element 36 within the elongated conduit member 6. The elongated element 36 may be arranged shortly upstream of the water moving device 12. For instance, the elongated element 36 may be connected to the plate member 22. The elongated element 36 extends along the longitudinal extension L. An end 38 of the elongated element 36 is pointed towards the first end portion of the elongated conduit member i.e., upwardly when the plate member 22 is in a position as it will have when placed in water and as shown in **Figs. 5a and 5b****.**

The elongated element 36 may have a broader extension along the radial direction R towards the water moving device 12 than at the end 38 of the elongated conduit member 36. In this manner, the elongated element 36 may form a pointed or conical element, onto which the ring members 28 and the collapsible wall 26 may be caught when the collapsible wall 26 is collapsed.

During installation of the water transporting device 2, in its compact state, the device 2 is directed towards its intended position within a fish habitat. There, the plate member 22 is sunk towards the bottom of the fish habitat e.g., by filling the cavity 32 with water as discussed above with reference to **Fig. 4****.** The buoyancy member 8 remains floating on or near the water surface thus, extending the elongated conduit member 6 along the longitudinal extension L to its full length. That is, the water transporting device 2 takes its extended state as shown in **Figs. 1** - **2b****.**

During removal of the water transporting device 2, the plate member 2 is lifted from the bottom of the fish habitat e.g., by filling the cavity 32 with a gas as discussed above with reference to **Fig. 4****.** As the plate member 22 floats upwardly towards the buoyancy member 8 and the water surface, the collapsible wall 26 is gradually collapsed with the ring members 28 being caught by the elongated element 36 and thus ensuring that the elongated conduit member 6 is collapsed in an orderly manner. As the plate member 22 reaches the water surface, the water transporting device 2 has taken its compact state again.

**Fig. 6** illustrates a method 100 for transporting water in a fish habitat. The fish habitat may be a fish habitat 4 suspended in open water as discussed above with reference to **Figs. 1** - **5b** and the method 100 may utilise a water transporting device 2 as discussed above with reference to **Figs. 1** - **5b****.** Accordingly, the following reference is also made to **Figs. 1** - **5b****.**

The method 100 comprises steps of:
- Positioning 102 the plate member 22 in abutment with an inside of a delimiting element of the fish habitat 4. The delimiting element may be e.g., a net and/or a canvas or a cage-like structure.
- Positioning 104 the first end portion 10 of the elongated conduit member 6 above the plate member 22.
- Moving water 106 with the water moving device 12 through the delimiting element via the through opening 24 into the elongated conduit member 6 and towards the first end portion 10 of the elongated conduit member 6. As discussed above, for this purpose the delimiting element underneath the plate member 22 is water permeable. For instance, by comprising a net.
- Ejecting water 108 through the at least one outlet opening 20 within the fish habitat 4 at a level above the plate member 22.

Thus, water is transferred from outside the fish habitat 4 into the fish habitat 4 at an upper level thereof, thereby providing fresh water into the fish habitat 4 at a level where water exchange otherwise may be reduced.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A water transporting device (2) for a fish habitat (4) configured to be suspension in open water, the water transporting device (2) comprising an elongated conduit member (6) configured to extend along a longitudinal extension (L), and a water moving device (12), wherein
a radial direction (R) extends perpendicularly to the longitudinal extension (L), wherein
the elongated conduit member (6) at a first end portion (10) thereof is provided with at least one outlet opening (20), wherein
the water moving device (12) is arranged at a second end portion (16) of the elongated conduit member (6), wherein
a plate member (22) is arranged at the second end portion (16) of the elongated conduit member (6), wherein
the plate member (22) extends in the radial direction (R) beyond the elongated conduit member (6), wherein
the plate member (22) is provided with a through opening (24) arranged in fluid communication with an inside of the elongated conduit member (6), and wherein
the water moving device (12) is arranged to move water through the through opening (24) and into the elongated conduit member (6).

2. The water transporting device according to claim 1, wherein a half (18) of the elongated conduit member (6) closest to the first end portion (10) is at least partially provided with a number of separate outlet openings (20), and wherein the at least one outlet opening (20) forms part of the number of outlet openings (20).

3. The water transporting device according to claim 2, wherein the number of separate outlet openings (20) are distributed around the elongated conduit member (6).

4. The water transporting device according to any one of the preceding claims, wherein the water moving device (12) comprises a rotatable impeller (14).

5. The water transporting device according to any one of the preceding claims, wherein the water moving device (12) is arranged in connection with the through opening (24).

6. The water transporting device according to any one of the preceding claims, wherein the elongated conduit member (6) comprises a collapsible wall (26) and a number of ring members (28) or at least one helical member (29), wherein the ring members (28) are, or the at least one helical member (29) is, connected to the collapsible wall (26) such that the collapsible wall (26) is secured in relation to the radial direction (R).

7. The water transporting device according to any one of the preceding claims, comprising a buoyancy member (8) arranged at the first end portion (10) of the elongated conduit member (6).

8. The water transporting device according to claim 7, wherein the buoyancy member (8) is connected to the plate member (22) via at least one flexible rope-shaped structure (30), and wherein the at least one flexible rope-shaped structure (30) is shorter along the longitudinal extension (L) than the collapsible wall (26).

9. The water transporting device according to any one of the preceding claims, wherein the plate member (22) is provided with a cavity (32), wherein the cavity (32) is configured to be filled with a fluid, and wherein the cavity (32) is sealable and openable.

10. The water transporting device according to any one of the preceding claims, wherein the plate member (22) has a conical shape, frustoconical shape, and/or part-spherical shape, and wherein a broad end of the conical shape, frustoconical shape, and/or part-spherical shape is arranged towards the elongated conduit member (6) seen along the longitudinal extension (L).

11. The water transporting device according to any one of the preceding claims, wherein the plate member (22) has a first main side (42) facing the elongated conduit member (6) and an opposite second main side (43) facing away from the elongated conduit member (6), and wherein the first main side (42) of plate member (22) has a trough shape and the second main side (43) of the plate member (22) has a convex shape.

12. The water transporting device according to claim 11, wherein the plate member (22) is provided with a sludge intake (40) at the first side (42) of plate member (22).

13. The water transporting device according to claim 12, wherein the sludge intake (40) is arranged at a portion of the plate member (22) where the trough shaped is at its deepest.

14. The water transporting device according to claim 12 or 13, comprising a sludge transport conduit (44), wherein the sludge transport conduit (44) is arranged in fluid communication with the sludge intake (40).

15. The water transporting device according to any one of the preceding claims, comprising fins (34) arranged extending along the longitudinal extension (L) in and/or at the through opening (24), and wherein the fins (34) are arranged upstream of the water moving device (12).

16. The water transporting device according to any one of the preceding claims, wherein downstream of the water moving device (12) there is arranged an elongated element (36) within the elongated conduit member (6), wherein the elongated element (36) extends along the longitudinal extension (L), and wherein an end (38) of the elongated element (36) is pointed towards the first end portion (10) of the elongated conduit member (6).

17. The water transporting device according to claim 16, wherein the elongated element (36) has a broader extension along the radial direction (R) towards the water moving device (12) than at the end (38) of the elongated conduit member (36).

18. The water transporting device according to any one of the preceding claims, comprising a strainer (46) arranged upstream of the water moving device (12) in or at the through opening (24).

19. A method (100) for transporting water in a fish habitat (4) suspended in open water, utilising a water transporting device (2) according to any one of the preceding claims, wherein the method (100) comprises steps of:
- positioning (102) the plate member (22) in abutment with an inside of a delimiting element of the fish habitat (4),
- positioning (104) the first end portion of the elongated conduit member (6) above the plate member (22),
- moving water (106) with the water moving device (12) through the delimiting element via the through opening (24) into the elongated conduit member (6) and towards the first end portion (10) of the elongated conduit member (6), and
- ejecting water (108) through the at least one outlet opening (20) within the fish habitat (4) at a level above the plate member (22).
